# FASCICULE DE BREVET EUROPEEN

(11) **EP 3 551 870 B1**
(45) Date de publication et mention de la délivrance du brevet: **24.01.2024**
(21) Numéro de dépôt: 17816965.2
(22) Date de dépôt: 01.12.2017
(51) Int. Cl.: F02K 1/70, F02K 1/72, B64D 29/00, B64D 45/00

(54) **NACELLE POUR TURBORÉACTEUR D'AÉRONEF ÉQUIPÉE D'UN DISPOSITIF DE DÉTECTION DE DÉFORMATION DE SA STRUCTURE MOBILE**
TREIBWERKSGONDEL FÜR EIN TURBFANFLUGZEUGTRIEBWERK MIT EINER VORRICHTUNG ZUR ERKENNUNG EINER VERFORMUNG SEINER MOBILEN STRUKTUR
AIRCRAFT TURBOFAN NACELLE EQUIPPED WITH A DEVICE FOR DETECTING DEFORMATION OF ITS MOBILE STRUCTURE

(30) Priorité: 07.12.2016 FR 1662073
(43) Date de publication de la demande: 16.10.2019
(73) Titulaire: Safran Nacelles, 76700 Gonfreville-l'Orcher (FR)
(72) Inventeur: KERBLER, Olivier, 76700 Gonfreville l'Orcher (FR); VALLEROY, Laurent Georges, 76700 Gonfreville l'Orcher (FR); HUE,Corentin, 76700 Gonfreville l'Orcher (FR); HEAU, Alexis, 76700 Gonfreville l'Orcher (FR)
(74) Mandataire: Germain Maureau
(86) Numéro de dépôt international: PCT/FR2017/053352
(87) Numéro de publication internationale: WO 2018/104632

(56) Documents cités:
- EP-A2- 1 972 548
- FR-A1- 3 019 229
- GB-A- 2 510 635
- US-A1- 2002 157 377

## Description

La présente invention concerne une nacelle pour turboréacteur d'aéronef comportant des moyens de détection de la casse d'un actionneur d'inverseur de poussée.

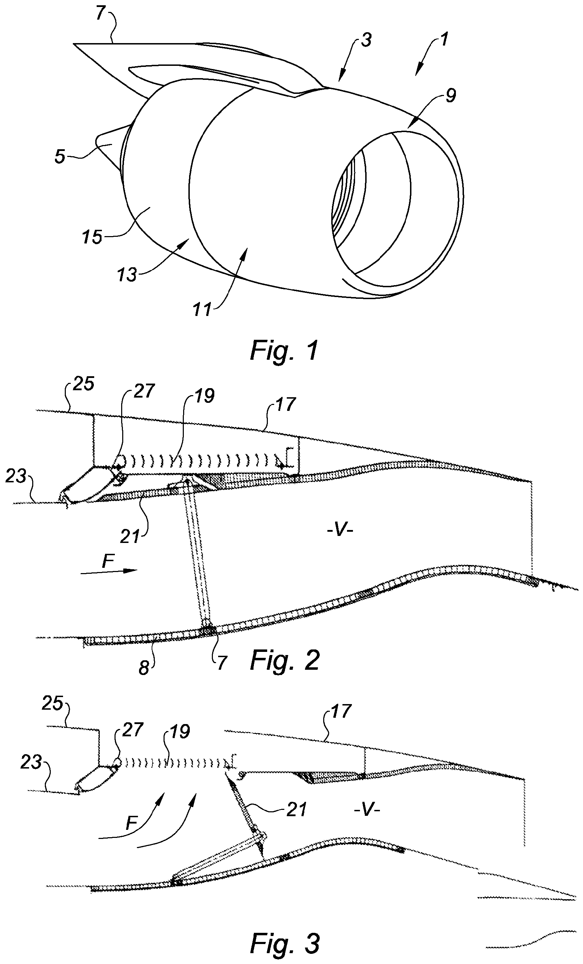

Un aéronef est mû par plusieurs turboréacteurs logés chacun dans une nacelle. L'ensemble propulsif constitué par un turboréacteur et la nacelle qui le reçoit est représenté à la figure 1.

L'ensemble propulsif 1 comprend une nacelle 3 supportant un turboréacteur 5. L'ensemble propulsif 1 est relié au fuselage de l'avion (non visible) par exemple grâce à un pylône 7 destiné à être suspendu sous une aile de l'avion.

La nacelle 3 présente généralement une structure tubulaire comprenant une section amont 9 définissant une entrée d'air en amont du turboréacteur 5, une section médiane 11 destinée à entourer une soufflante du turboréacteur, une section aval 13 comprenant un capotage externe 15 pouvant abriter un dispositif d'inversion de poussée et destinée à entourer la chambre de combustion du turboréacteur, et est généralement terminée par une tuyère d'éjection dont la sortie est située en aval du turboréacteur.

Cette nacelle abrite le turboréacteur 5 pouvant être du type double flux, apte à générer par l'intermédiaire des aubes de la soufflante en rotation un flux d'air chaud (également appelé flux primaire), issu de la chambre de combustion du turboréacteur, et un flux d'air froid (flux secondaire) qui circule à l'extérieur du turboréacteur à travers une veine, également appelée canal annulaire, formée entre un carénage du turboréacteur et une paroi interne du capotage externe 15 de la nacelle. Les deux flux d'air sont éjectés du turboréacteur par l'arrière de la nacelle.

Le dispositif d'inversion de poussée est, lors de l'atterrissage de l'aéronef, destiné à améliorer la capacité de freinage de celui-ci en redirigeant vers l'avant au moins une partie de la poussée générée par le turboréacteur.

Dans cette phase, le dispositif d'inversion de poussée obstrue la veine de flux d'air froid et dirige ce dernier vers l'avant de la nacelle, générant de ce fait une contre-poussée qui vient s'ajouter au freinage des roues de l'aéronef.

Les moyens mis en oeuvre pour réaliser cette réorientation du flux froid varient selon que le dispositif d'inversion de poussée est du type à portes ou est du type à grilles.

Cependant, dans tous les cas, le capotage externe 15 comprend une structure mobile déplaçable entre, d'une part, une position déployée dans laquelle elle ouvre dans la nacelle un passage destiné au flux dévié, et d'autre part, une position d'escamotage dans laquelle elle ferme ce passage.

Concernant les dispositifs d'inversion de poussée à grilles de déviation, on connaît de l'art antérieur deux types de dispositifs d'inversion de poussée à grilles de déviation.

Un premier dispositif d'inversion de poussée à grilles de déviation est du type « à grilles fixes », dispositif représenté aux figures 2 et 3 auxquelles on se réfère à présent.

Les figures 2 et 3 sont des vues en coupe longitudinale de la nacelle, centrées sur les sections médiane et aval de la nacelle, la nacelle étant illustrée respectivement en fonctionnement jet direct (figure 2) et en fonctionnement jet inversé (figure 3).

La structure mobile de la nacelle comprend deux demi-capots sensiblement hémicylindriques (formant le capotage externe 15 visible à la figure 1).

Chaque demi-capot est mobile en translation le long de rails de guidage supérieurs (classiquement appelés « rails 12 heures » en raison de leurs positions au somment de la nacelle) fixes dans la nacelle et s'inscrivant de part et d'autre du pylône 7 (ou mât) visible à la figure 1, et le long d'un rail de guidage inférieur (classiquement appelé « rail 6 heures » en raison de sa position dans la partie inférieure de la nacelle) également fixe dans la nacelle.

Les deux demi-capots hémicylindriques forment un capot d'inverseur 17. Le capot d'inverseur est sensiblement annulaire. En position escamotée, correspondant à un fonctionnement jet direct de la nacelle, le capot d'inverseur 17 assure une continuité aérodynamique extérieure avec une structure fixe de la nacelle et recouvre des grilles de déviation 19 annulaires associées à des volets d'inversion 21.

De façon connue, les grilles de déviation 19 sont attachées à un carter de soufflante 23 du turboréacteur, à l'aide d'un cadre avant 27 fixe.

Les volets d'inversion 21 forment, quant à eux, des portes de blocage pouvant être activées par le coulissement du capot engendrant une fermeture de la veine V en aval des grilles, comme illustré à la figure 3, de manière à optimiser la réorientation du flux d'air froid F.

Lorsque le capot d'inverseur 17 se déplace vers l'aval de la nacelle jusqu'à atteindre une position déployée correspondant à un fonctionnement de la nacelle en jet inversé dans laquelle il découvre les grilles de déviation 19, il crée un passage dans la nacelle destiné à la circulation d'un flux d'air secondaire dévié.

La réorientation du flux d'air est effectuée grâce aux grilles de déviation 19 associées aux volets d'inversion 21, le capot 17 ayant une simple fonction de coulissage visant à découvrir ou recouvrir ces grilles de déviation.

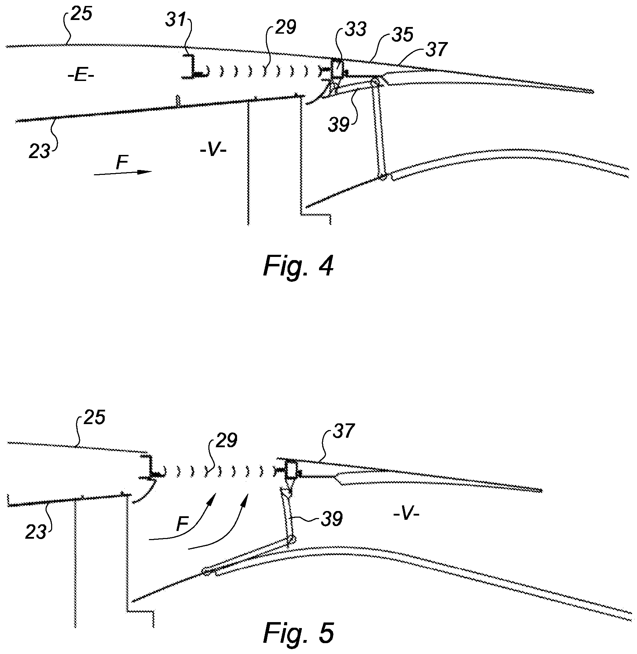

Un deuxième dispositif d'inversion de poussée à grilles de déviation est du type « à grilles translatantes », dispositif représenté aux figures 4 et 5 auxquelles on se réfère à présent.

Les figures 4 et 5 sont des vues en coupe longitudinale de la nacelle, centrées sur les sections médiane et aval de la nacelle, la nacelle étant illustrée respectivement en fonctionnement jet direct et en fonctionnement jet inversé.

Comme illustré à la figure 4, des grilles de déviation 29 sont renfermées en fonctionnement jet direct dans une enveloppe définie par l'espace annulaire E formé par un capot de soufflante 25 et le carter de soufflante 23 du turboréacteur.

Les grilles de déviation 29 sont supportées de façon connue en leur extrémité amont par un cadre avant 31 mobile et en leur extrémité aval par un cadre arrière 33 mobile, solidaire d'un bord amont 35 d'un capot d'inverseur 37.

Comme pour le dispositif d'inversion de poussée à grilles fixes illustré aux figures 2 et 3, le capot d'inverseur 37 est sensiblement annulaire et est formé par deux demi-capots hémicylindriques. Les deux demi-capots hémicylindriques forment le capotage externe 15 visible à la figure 1. Chaque demi-capot est mobile en translation le long de rails supérieurs (« rails 12 heures ») fixes dans la nacelle et s'inscrivant de part et d'autre du pylône, et le long d'un rail inférieur (« rail 6 heures ») fixe dans la nacelle. La structure mobile de la nacelle comprend toutefois ici le capot d'inverseur 37 et les grilles de déviation 29 translatantes qui sont solidaires du capot d'inverseur 37.

En position escamotée, correspondant à un fonctionnement jet direct de la nacelle (figure 4), le capot d'inverseur 37 de la structure mobile assure une continuité aérodynamique avec la structure fixe de la nacelle.

Des volets d'inversion 39 sont par ailleurs solidaires du cadre arrière 33 des grilles de déviation 29. En fonctionnement en jet direct de la nacelle, tel que celui représenté sur la figure 4, les volets sont dans une position dite fermée.

Selon ce type de dispositif d'inversion de poussée à grilles translatantes, les grilles de déviation 29 sont mobiles et se translatent avec le capot d'inverseur 37 lors des phases d'inversion de poussée.

La figure 5 illustre la nacelle en position de jet inversé. Dans une telle position, les grilles de déviation 29 et le capot d'inverseur 37 sont reculés en aval de la nacelle. Lorsque la structure mobile se déplace vers l'aval de la nacelle jusqu'à atteindre une position déployée correspondant à un fonctionnement de la nacelle en jet inversé, la structure mobile crée un passage dans la nacelle destiné à la circulation d'un flux d'air F secondaire dévié.

Les grilles de déviation 29 sont en aval de l'enveloppe que forment le capot de soufflante 25 et le carter de soufflante 23, devenant ainsi fonctionnelles pour permettre à au moins une partie du flux d'air F traversant la veine V de s'échapper de la nacelle et d'être redirigée vers l'amont de la nacelle.

En fonctionnement en jet inversé de la nacelle, tel que celui représenté sur la figure 5, les volets d'inversion de poussée 39 ont pivoté par rapport au fonctionnement en jet direct de la nacelle. Ces volets sont alors dans une position dite ouverte et obstruent au moins partiellement la veine V de circulation du flux d'air F. Ils contribuent à la redirection d'au moins une partie du flux d'air F à travers les grilles de déviation 29.

Quel que soit le type de dispositif d'inversion de poussée à grilles (fixes ou translatantes) retenu, le déplacement de la structure mobile, structure comprenant le capot d'inverseur seul lorsque le dispositif d'inversion de poussée est du type à grilles fixes ou comprenant le capot d'inverseur et les grilles translatantes lorsque le dispositif d'inversion de poussée est du type à grilles translatantes, est obtenu grâce à l'activation d'un système d'actionnement comprenant un ensemble d'actionneurs hydrauliques, pneumatiques ou électriques. Ces actionneurs sont répartis sur la circonférence de la nacelle et présentent typiquement une première extrémité solidaire de la structure fixe de la nacelle et une deuxième extrémité solidaire de la structure mobile de la nacelle. Une configuration connue consiste en deux actionneurs disposés dans une zone supérieure située à proximité des rails supérieurs (« rail 12 heures ») et deux actionneurs disposés dans une zone inférieure située à proximité du rail inférieur (« rail 6 heures »).

Les actionneurs du capot d'inverseur sont soumis à des contraintes importantes lors de chaque actionnement intervenant lors de l'activation du dispositif d'inversion de poussée.

Ces contraintes peuvent, potentiellement, entraîner plusieurs avaries sur ces actionneurs telles que, notamment, une rupture du tube d'un ou plusieurs des actionneurs du capot d'inverseur, une perte de liaison entre un ou plusieurs de ces actionneurs et la structure mobile de la nacelle, une casse de la pignonnerie d'un ou plusieurs de ces actionneurs, casse pouvant entraîner une perte partielle du chemin d'effort entre les structures fixe et mobile.

Lorsque l'une ou plusieurs de ces avaries interviennent sur l'un des actionneurs du dispositif d'inversion de poussée, le dispositif d'inversion de poussée demeure cependant opérationnel car les efforts sont repris par les actionneurs qui sont sains.

Toutefois, la reprise des efforts par les actionneurs qui sont sains entraîne à terme une déformation de la structure mobile, déformation qui n'est détectable que lors d'un contrôle approfondi de la nacelle. Ainsi, l'avion peut continuer de voler tant qu'aucun contrôle approfondi de la nacelle n'est opéré.

Cependant, la structure mobile de la nacelle peut être déformée d'avantage lors d'évènements particuliers tel qu'un atterrissage forcé par exemple, en raison de la mauvaise répartition des efforts au niveau des actionneurs.

Afin d'éviter une telle déformation, la structure mobile de la nacelle est aujourd'hui surdimensionnée d'un point de vue fatigue, ceci afin de lui permettre de reprendre les efforts engendrés par la perte d'un actionneur du dispositif d'inversion de poussée, tout en évitant sa déformation notamment lors d'évènements particuliers.

Ce surdimensionnement fatigue de la structure mobile de la nacelle présente l'inconvénient que le capot d'inverseur a une masse élevée.

Le document GB2510635 décrit une méthode de prédiction des défauts dans un système d'inversion de poussée d'un aéronef.

Le document US2002/0157377 décrit un système et une méthode de contrôle de l'arrimage des inverseurs de poussée d'un turboréacteur.

Le document EP1972548 décrit un agencement d'actionneurs.

La présente invention vise à résoudre les inconvénients rencontrés dans les dispositifs d'inversion de poussée à grilles fixes et translatantes de l'art antérieur, en proposant un dispositif capable de détecter une déformation de la structure mobile qui n'est détectable dans l'art antérieur que lors d'un contrôle approfondi de la nacelle.

La présente invention est définie par la revendication 1 et concerne pour ce faire une nacelle pour turboréacteur d'aéronef, comprenant un dispositif d'inversion de poussée, ladite nacelle comprenant :
- une structure fixe, et
- une structure mobile, déplaçable en translation le long d'un axe sensiblement parallèle à un axe longitudinal de la nacelle, entre une position escamotée dans laquelle elle assure une continuité aérodynamique avec ladite structure fixe de la nacelle lors d'un fonctionnement de la nacelle en jet direct et une position déployée dans laquelle elle ouvre un passage destiné à la circulation d'un flux d'air secondaire dévié lors d'un fonctionnement de la nacelle en jet inversé.

Ladite nacelle est remarquable en ce qu'elle comprend au moins un capteur de position, conçu et agencé dans la nacelle pour détecter une déformation de la structure mobile dépassant un seuil de déformation prédéterminé autorisé, ledit capteur de position comprenant :
- un détecteur, solidaire de la structure fixe de la nacelle, et
- une cible, solidaire de la structure mobile de la nacelle,
le capteur de position étant en outre conçu pour envoyer un signal à un dispositif externe lorsque la cible se trouve sensiblement en vis-àvis du détecteur.

Ainsi, en prévoyant d'équiper la nacelle de capteurs conçus et agencés dans la nacelle pour détecter une déformation de la structure mobile dépassant un seuil de déformation prédéterminé autorisé, il est à présent possible de détecter tout évènement sortant du cadre de dimensionnement en fatigue de la structure.

En cas de détection d'une déformation de la structure mobile, une opération de maintenance visant à inspecter et potentiellement remettre en état les actionneurs du dispositif d'inversion de poussée et la structure mobile peut être prévue.

Alternativement, le pilote peut choisir de limiter l'application de la contre-poussée maximale lors d'une phase d'inversion de poussée (par exemple en réduisant le régime moteur) consécutivement à la détection de la déformation de la structure (compte tenu du fait que le pilote a connaissance de cette déformation de la structure, ce qui n'est pas le cas dans l'art antérieur).

Ainsi, grâce à la détection d'une déformation de la structure, il est à présent possible d'agir sur la structure mobile ou sur l'application de la charge applicable lors d'une opération d'inversion de poussée en amont d'une déformation irréversible de la structure.

Il n'est dès lors plus nécessaire, contrairement à l'art antérieur, de surdimensionner d'un point de vue fatigue la structure mobile.

En parvenant de la sorte à réduire le dimensionnement fatigue de la structure mobile, la masse de la structure mobile s'en trouve réduite considérablement par rapport à l'art antérieur.

Selon des caractéristiques toutes optionnelles de l'invention :
- le capteur de position est un capteur de proximité dont le détecteur est solidaire de la structure fixe de la nacelle et dont la cible est solidaire de la structure mobile de la nacelle et est adaptée pour changer l'état d'un champ magnétique émis par le détecteur lorsque ladite cible se trouve sensiblement en vis-à-vis dudit détecteur; ce capteur est capable de détecter la position de la structure mobile sans contact physique, ce qui permet de ne pas user la structure dans une zone de fortes frictions potentielles et de grandes vitesses de déplacement de la structure mobile ;
- alternativement, le capteur de position est un capteur optique dont le détecteur est solidaire de la structure fixe de la nacelle et émet un flux lumineux et dont la cible est solidaire de la structure mobile de la nacelle et comporte un moyen de réflexion dudit flux lumineux ; comme pour le capteur de proximité, ce capteur est capable de détecter la position de la structure mobile sans contact physique, ce qui permet de ne pas user la structure dans une zone de fortes frictions potentielles et de grandes vitesses de déplacement de la structure mobile ;
- selon une autre alternative, le capteur de position est un capteur électromécanique dont le détecteur est solidaire de la structure fixe de la nacelle et comprend un levier de contact et dont la cible est solidaire de la structure mobile de la nacelle et est conçue pour actionner ledit levier de contact lorsque ladite cible se trouve sensiblement en vis-à-vis dudit détecteur;
- dans la nacelle selon l'invention :
   - la structure fixe comprend :
      - un système de guidage supérieur de ladite structure mobile, positionné à proximité d'un pylône destiné à relier ladite nacelle à une aile d'aéronef, et
      - un système de guidage inférieur de ladite structure mobile, sensiblement diamétralement opposé audit système de guidage supérieur, et
   - la structure mobile comprend :
      - un ensemble de grilles de déviation, contenues dans une enveloppe définie par un capot de soufflante et par un carter de soufflante d'un turboréacteur lors d'un fonctionnement de la nacelle en jet direct,
      - un capot d'inverseur, solidaire dudit ensemble de grilles de déviation,
      - un coulisseau, conçu pour permettre le déplacement de ladite structure mobile le long du système de guidage inférieur,
      ladite nacelle étant remarquable en ce que le détecteur du capteur de position est monté sur au moins un desdits système de guidage, et en ce que la cible est montée sur ledit coulisseau ;
- la structure fixe comprend en outre un bord de déviation, assurant une ligne aérodynamique avec une partie aval d'un carter de soufflante d'un turboréacteur, et le détecteur dudit capteur de position est monté à proximité dudit bord de déviation ;
- En variante, dans la nacelle de l'invention :
   - la structure fixe comprend :
      - un système de guidage supérieur de ladite structure mobile, positionné à proximité d'un pylône destiné à relier ladite nacelle à une aile d'aéronef, et
      - un système de guidage inférieur de ladite structure mobile, sensiblement diamétralement opposé audit système de guidage supérieur, et
   - la structure mobile comprend un capot d'inverseur, déplaçable en translation le long d'un axe sensiblement parallèle à un axe longitudinal de la nacelle, entre une position escamotée dans laquelle il assure une continuité aérodynamique avec ladite structure fixe de la nacelle lors d'un fonctionnement de la nacelle en jet direct et une position déployée dans laquelle il ouvre un passage destiné à la circulation d'un flux d'air secondaire dévié lors d'un fonctionnement de la nacelle en jet inversé,
   ladite nacelle étant remarquable en ce que le détecteur du capteur de position est monté sur au moins un desdits système de guidage, et en ce que la cible est montée sur ledit capot d'inverseur, à proximité d'un bord amont dudit capot d'inverseur ;
- le système de guidage supérieur comprend deux rails de guidage profilés le long du pylône et dans laquelle le système de guidage inférieur comporte un rail de guidage unique, ladite nacelle étant caractérisée en ce qu'elle comporte un détecteur sur chaque rail du système de guidage supérieur et un détecteur sur le rail du système de guidage inférieur.
- Selon une autre variante non revendiquée,
   - la structure fixe comprend :
      - un système de guidage supérieur de ladite structure mobile, positionné à proximité d'un pylône destiné à relier ladite nacelle à une aile d'aéronef, et
      - un système de guidage inférieur de ladite structure mobile, sensiblement diamétralement opposé audit système de guidage supérieur, et
   - la structure mobile comprend :
      - un ensemble de grilles de déviation, contenues dans une enveloppe définie par un capot de soufflante et par un carter de soufflante d'un turboréacteur lors d'un fonctionnement de la nacelle en jet direct,
      - un capot d'inverseur, solidaire dudit ensemble de grilles de déviation,

   la nacelle comprenant en outre une pluralité d'actionneurs conçus pour déplacer ladite structure mobile lors de leur activation,
   la nacelle est remarquable en ce que le capteur de position est un capteur de position linéaire du type « LVDT » ou magnétostrictif, positionné à proximité d'au moins un desdits actionneurs. Dans cette configuration, un capteur de position linéaire peut être positionné à proximité de chacun desdits actionneurs.
- Selon une variante commune à l'ensemble des modes de réalisation, la nacelle de l'invention comporte au moins une butée de fin de course montée sur au moins un système de guidage de la structure mobile.

D'autres caractéristiques et avantages de l'invention apparaîtront à la lecture de la description détaillée qui suit pour la compréhension de laquelle on se reportera aux dessins annexés dans lesquels :
- la figure 1 représente un ensemble propulsif de l'art antérieur ;
- les figures 2 et 3 sont des vues en coupe longitudinale d'une nacelle de l'art antérieur munie d'un dispositif d'inversion de poussée à grilles fixes, respectivement illustrée en fonctionnement jet direct et jet inversé ;
- les figures 4 et 5 sont des vues en coupe longitudinale d'une nacelle de l'art antérieur munie d'un dispositif d'inversion de poussée à grilles translatantes, respectivement illustrée en fonctionnement jet direct et jet inversé ;
- la figure 6 illustre un ensemble propulsif selon l'invention, dont la nacelle est pourvue d'un dispositif d'inversion de poussée à grilles translatantes ;
- la figure 7 est une vue agrandie de la zone A de la figure 6, la nacelle étant obtenue selon un premier mode de réalisation de l'invention ;
- la figure 8 est une vue agrandie de la zone A de la figure 6, la nacelle étant obtenue selon un deuxième mode de réalisation de l'invention ;
- la figure 9 est une vue agrandie de la zone A de la figure 6, la nacelle étant obtenue selon un troisième mode de réalisation de l'invention ;
- les figures 10 et 11 montrent la nacelle de l'invention obtenue selon un quatrième mode de réalisation, respectivement illustrée en fonctionnement jet direct et jet inversé ;
- les figures 12 et 13 représentent une nacelle obtenue selon l'invention, pourvue d'un dispositif d'inversion de poussée à grilles fixes, respectivement illustrée en fonctionnement jet direct et jet inversé ;
- la figure 14 est un agrandissement de la zone XIV de la figure 13.

Sur l'ensemble des figures, des références identiques ou analogues représentent des organes ou ensembles d'organes identiques ou analogues.

A noter que dans la description et dans les revendications, les termes « amont » et «aval » doivent s'entendre par rapport à la circulation du flux d'air à l'intérieur de l'ensemble propulsif formé par la nacelle et le turboréacteur, c'est-à-dire de la gauche vers la droite en référence à l'ensemble des figures.

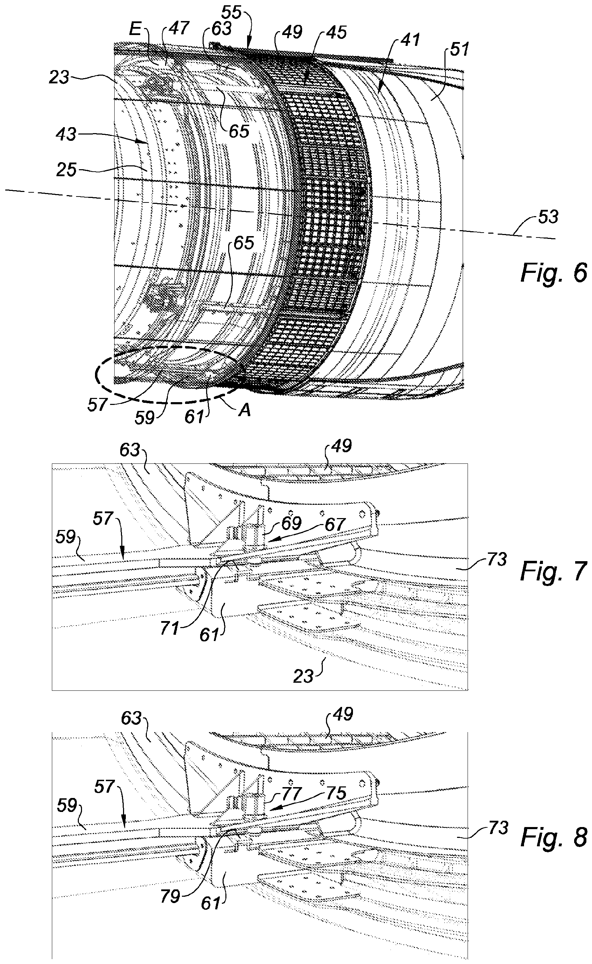

On se réfère à la figure 6 sur laquelle on a représenté un ensemble propulsif selon l'invention, dont la nacelle 41 est pourvue d'un dispositif d'inversion de poussée à grilles translatantes illustré en fonctionnement de jet inversé.

Conformément à la nacelle présentée aux figures 4 et 5 de l'art antérieur, la nacelle 41 de l'invention comporte une structure fixe 43 et une structure mobile 45.

Concernant la structure fixe 43, cette structure est fixe relativement au reste de la nacelle 41. La structure fixe comprend un capot de soufflante 25 définissant, avec le carter de soufflante 23 du turboréacteur, un espace annulaire E formant une enveloppe 47.

Concernant la structure mobile 45, cette structure est mobile relativement à la structure fixe 43 de la nacelle. La structure mobile de la nacelle comprend un ensemble de grilles de déviation 49 et un capot d'inverseur 51. Un bord amont du capot d'inverseur est solidaire d'un cadre arrière de l'ensemble de grilles. Ainsi, un déplacement du capot d'inverseur dans la nacelle entraîne de concert le déplacement des grilles de déviation dans la nacelle.

Lorsque la nacelle est en mode de fonctionnement jet direct (mode de fonctionnement non représenté à la figure 6), les grilles de déviation 49 sont contenues dans l'enveloppe 47 définie par le capot de soufflante et par le carter de soufflante appartenant au turboréacteur. Le capot d'inverseur 51 et les grilles de déviation 49 se trouvent dans une position dite escamotée, dans laquelle le capot d'inverseur 51 assure une continuité aérodynamique avec le capot de soufflante 25 de la structure fixe 43 de la nacelle.

Lorsque la nacelle est en mode de fonctionnement jet inversé (fonctionnement représenté à la figure 6), la structure mobile 45 s'est translatée le long d'un axe 53 sensiblement parallèle à un axe longitudinal de la nacelle. Le capot d'inverseur 51 et les grilles de déviation 49 se trouvent dans une position dite déployée, dans laquelle un passage dans la nacelle est ouvert. Les grilles de déviation 49 sont en aval de l'enveloppe 47 définie par le capot de soufflante 25 et le carter de soufflante 23. Les grilles de déviation 49 deviennent ainsi fonctionnelles pour permettre à une partie d'un flux d'air traversant la veine de s'échapper de la nacelle et d'être redirigée vers l'amont de la nacelle.

Le déplacement de la structure mobile est assuré suivant un ensemble de systèmes de guidage.

L'ensemble de systèmes de guidage comporte à cet effet un système de guidage supérieur 55, positionné à proximité d'un pylône destiné à relier la nacelle à une aile d'aéronef et un système de guidage inférieur 57, sensiblement diamétralement opposé au système de guidage supérieur.

Le système de guidage supérieur 55 et le système de guidage inférieur 57 sont tous deux fixes dans la nacelle et appartiennent ainsi à la structure fixe 43 de la nacelle.

Le système de guidage supérieur 55 comporte deux rails de guidage (« rails 12 heures » en raison de leur position au sommet de la nacelle). Ces rails de guidage sont par exemple profilés le long du pylône, de part et d'autre du pylône. Ces rails peuvent également en variante être disposés sur un élément intermédiaire solidaire du pylône lorsque l'ensemble propulsif est monté.

Le système de guidage inférieur 57 comporte quant à lui un rail de guidage 59 unique (mieux visible aux figures 7 à 9), également appelé « rail 6 heures » en raison de sa position dans la partie inférieure de la nacelle.

La structure mobile 45 de la nacelle comporte en outre un coulisseau 61 (mieux visible aux figures 7 à 9) solidaire d'un cadre avant 63 mobile (mieux visible aux figures 7 à 9) supportant une extrémité amont des grilles de déviation 49. Le coulisseau 61 est conçu pour permettre le déplacement de la structure mobile 45 le long du système de guidage inférieur 57.

De façon connue, le déplacement de la structure mobile entre sa position escamotée et sa position déployée est obtenu grâce à l'activation d'une pluralité d'actionneurs 65 pouvant être de nature hydrauliques, pneumatiques ou électriques.

Ces actionneurs 65 sont répartis sur la circonférence de la nacelle (seulement deux actionneurs sont visibles à la figure 6, mais il doit être compris que deux autre actionneurs sont positionnés sur la circonférence de la nacelle, symétriquement aux deux actionneurs représentés).

Plus précisément, deux actionneurs 65 sont disposés dans une zone supérieure de la nacelle, située à proximité du système de guidage supérieur 55 et deux actionneurs 65 sont disposés dans une zone inférieure de la nacelle, située à proximité du système de guidage inférieur 57.

Selon l'invention, la nacelle comporte un ou plusieurs capteurs de position conçus et agencés dans la nacelle pour détecter une déformation de la structure mobile dépassant un seuil de déformation prédéterminé autorisé.

Contrairement à certains capteurs de position utilisés dans les nacelles de l'art antérieur pour suivre le déplacement des actionneurs du dispositif d'inversion de poussée, il est envisagé dans le cadre de la présente invention de concevoir un capteur de position non pas pour mesurer le déplacement des actionneurs mais pour détecter une déformation de la structure mobile dépassant un seuil de déformation prédéterminé autorisé.

Le capteur de position de l'invention comprend un détecteur, solidaire de la structure fixe de la nacelle, et une cible, solidaire de la structure mobile de la nacelle, le capteur de position étant conçu pour envoyer un signal à un dispositif externe lorsque la cible se trouve sensiblement en vis-à-vis du détecteur.

Selon un premier mode de réalisation de l'invention, illustré à la figure 7 obtenue en agrandissant la zone A de la figure 6, un capteur de position utilisé dans le cadre de la présente invention est un capteur de proximité 67.

Le capteur de proximité 67 comporte un détecteur 69 solidaire de la structure fixe de la nacelle et comporte une cible 71 solidaire de la structure mobile de la nacelle.

Le détecteur 69 du capteur de proximité 67 est monté sur le rail de guidage 59 du système de guidage inférieur 57. De manière préférée mais non limitative, le détecteur est monté à proximité d'un bord de déviation 73, fixe par rapport à la nacelle, assurant une ligne aérodynamique avec une partie aval du carter de soufflante 23 du turboréacteur.

La cible 71 est quant à elle montée de préférence sur le coulisseau 61.

Le fonctionnement du capteur de proximité est connu de l'homme du métier. Le détecteur 69 émet un champ magnétique, et la cible 71 est adaptée pour changer l'état de ce champ magnétique lorsqu'elle se trouve sensiblement en vis-à-vis du détecteur 69.

Selon un deuxième mode de réalisation de l'invention, illustré à la figure 8 obtenue en agrandissant la zone A de la figure 6, un capteur de position utilisé dans le cadre de la présente invention est un capteur optique 75.

Le capteur optique 75 comporte un détecteur 77 solidaire de la structure fixe de la nacelle et comporte une cible 79 solidaire de la structure mobile de la nacelle.

Comme pour le détecteur 69 du capteur de proximité 67, le détecteur 77 du capteur optique 75 est monté sur le rail de guidage 59 du système de guidage inférieur 57. De manière préférée mais non limitative, le détecteur est monté à proximité du bord de déviation 73. La cible 79 est également de préférence montée sur le coulisseau 61.

Le fonctionnement du capteur optique est connu de l'homme du métier. Le détecteur 77 émet un flux lumineux, par exemple par l'intermédiaire d'un ensemble de diodes ou de lasers, et la cible 79 comporte un moyen de réflexion du flux lumineux, tel qu'un miroir, adapté pour réfléchir le flux lumineux émis par le détecteur lorsque la cible 79 se trouve sensiblement en vis-à-vis du détecteur 77.

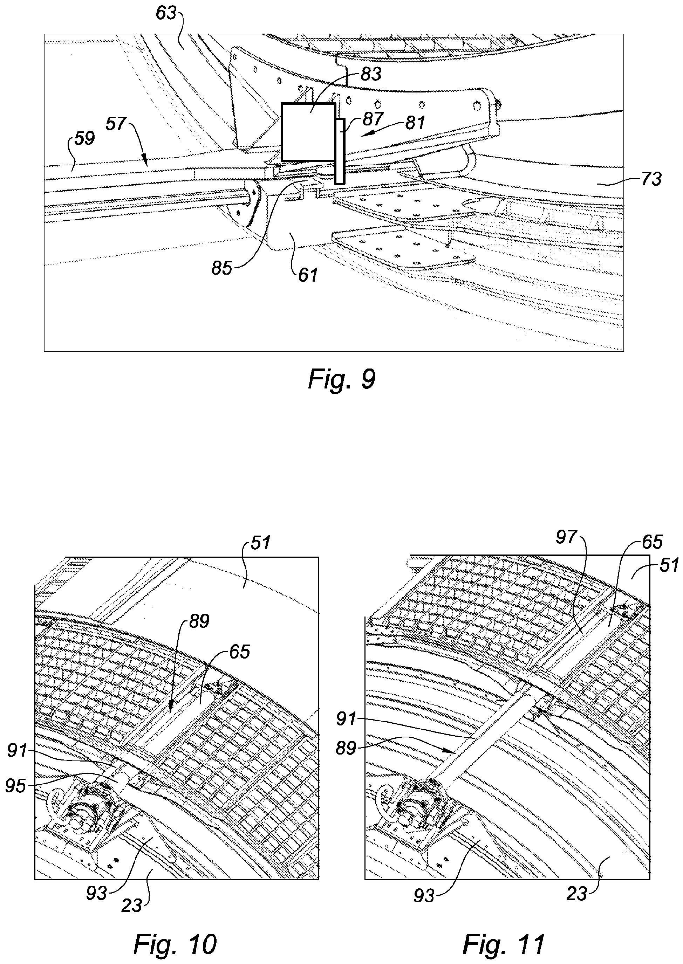

Selon un troisième mode de réalisation de l'invention, illustré à la figure 9 obtenue en agrandissant la zone A de la figure 6, un capteur de position utilisé dans le cadre de la présente invention est un capteur électromécanique 81.

Le capteur électromécanique comporte un détecteur 83 solidaire de la structure fixe de la nacelle et comporte une cible 85 solidaire de la structure mobile de la nacelle.

Comme pour le capteur de proximité 67 et pour le capteur optique 75, le détecteur 83 du capteur électromécanique 81 est monté sur le rail de guidage 59 du système de guidage inférieur 57. De manière préférée mais non limitative, le détecteur est monté à proximité du bord de déviation 73. La cible 85 est quant à elle montée de préférence sur le coulisseau 61.

Le détecteur 83 du capteur électromécanique 81 comprend un levier de contact 87, qui peut être actionné par la cible lorsque la cible 85 se trouve sensiblement en vis-à-vis du détecteur 83.

Selon une configuration non revendiquée et représentée aux figures 10 et 11 sur lesquelles on a représenté la nacelle des figures 6 à 9, respectivement selon un mode de fonctionnement en jet direct et en jet inversé, le capot de soufflante ayant été occulté pour une meilleure compréhension, un capteur de position peut être un capteur de position linéaire 89 du type « LVDT » (acronyme anglais de « Linear Variable Differential Transformer ») connu de l'homme du métier, ou un capteur magnétostrictif ou équivalent.

Le capteur de position linéaire 89 « LVDT » est positionné à proximité d'au moins un des actionneurs 65, ce qui permet de détecter tout évènement sur les actionneurs ou sur la structure mobile.

Le capteur de position linéaire 89 comporte un corps fixe 91 monté sur une ferrure 93 fixée sur le carter de soufflante 23, ferrure à laquelle est rattaché un corps fixe 95 de l'actionneur 65, et un corps mobile 97, télescopique par rapport audit corps fixe 91, rattaché à la structure mobile de la nacelle, par exemple au capot d'inverseur 51 de la structure mobile.

Avantageusement, le capteur de position linéaire 89 « LVDT » est positionné à proximité de chaque actionneur du dispositif d'inversion de poussée, ceci afin de détecter finement les évènements intervenant sur les actionneurs ou sur les zones de la structure mobile à proximité des actionneurs.

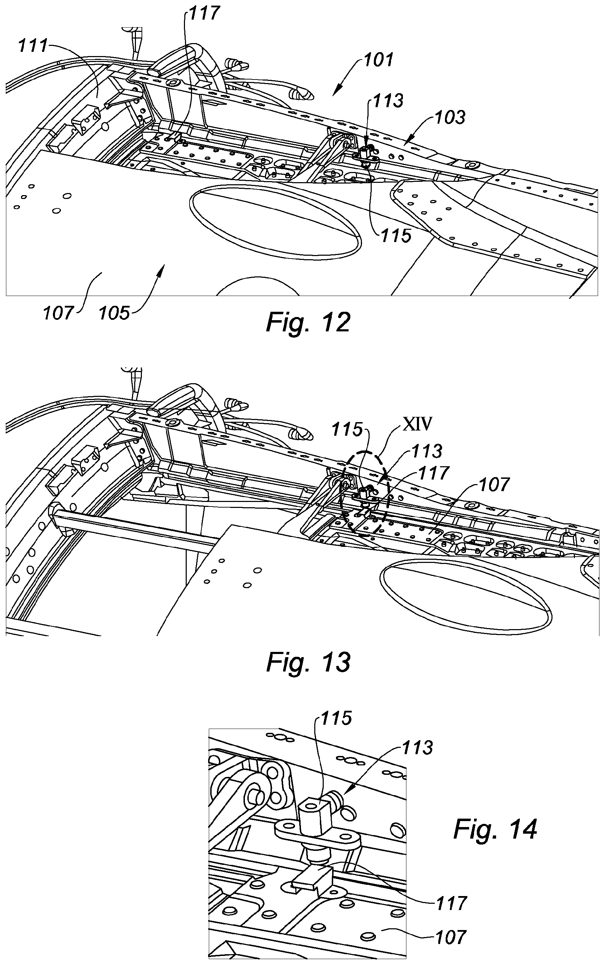

Selon une variante représentée aux figures 12 à 14, la nacelle peut être pourvue d'un dispositif d'inversion de poussé à grilles fixes.

On se réfère à la figure 12 sur laquelle on a représenté un ensemble propulsif selon l'invention, dont la nacelle 101 est pourvue d'un dispositif d'inversion de poussée à grilles fixes, illustré en fonctionnement de jet direct.

Conformément à la nacelle présentée aux figures 2 et 3 de l'art antérieur, la nacelle 101 de l'invention comporte une structure fixe 103 et une structure mobile 105.

Concernant la structure fixe 103, cette structure est fixe relativement au reste de la nacelle 101. La structure fixe comprend un capot de soufflante (non visible ici).

Concernant la structure mobile 105, cette structure est mobile relativement à la structure fixe 103 de la nacelle. La structure mobile de la nacelle comprend un capot d'inverseur 107.

Lorsque la nacelle est en mode de fonctionnement jet direct (mode de fonctionnement représenté à la figure 12), le capot d'inverseur 107 (dont sa représentation est en vue écorchée aux figures 12 et 13) est en position escamotée dans laquelle il assure une continuité aérodynamique avec le capot de soufflante et recouvre des grilles de déviation (non représentées ici pour une bonne clarté de la figure). Les grilles de déviation sont attachées au carter de soufflante (non représenté) du turboréacteur et à un capot de soufflante (non représenté), à l'aide d'un cadre avant 111 fixe.

Lorsque la nacelle est en mode de fonctionnement jet inversé (représenté à la figure 13), le capot d'inverseur 107 s'est translaté le long de l'axe 53 (visible à la figure 6) sensiblement parallèle à un axe longitudinal de la nacelle. Le capot d'inverseur 107 se trouve dans une position de déploiement dans laquelle un passage dans la nacelle est ouvert. Les grilles de déviation sont alors découvertes et deviennent ainsi fonctionnelles pour permettre à une partie d'un flux d'air traversant la veine de s'échapper de la nacelle et d'être redirigée vers l'amont de la nacelle.

Le déplacement de la structure mobile est assuré par l'ensemble de systèmes de guidage supérieur et inférieur conformes aux systèmes de guidage supérieur 55 et inférieur 57 discutés en référence aux figures 6 à 9 lorsque la nacelle est équipée d'un dispositif d'inversion de poussée à grilles translatantes et appartenant à la structure fixe 103 de la nacelle.

Selon l'invention, la nacelle comporte un ou plusieurs capteurs de position 113 conçus et agencés dans la nacelle pour détecter une déformation de la structure mobile dépassant un seuil de déformation prédéterminé autorisé.

Comme illustré à la figure 12, le capteur de position 113 comprend un détecteur 115, solidaire de la structure fixe de la nacelle, et une cible 117, solidaire du capot d'inverseur 107.

Le détecteur 115 est de préférence monté sur le rail de guidage supérieur. La cible 117 est quant à elle montée de préférence directement sur le capot d'inverseur 107.

Le capteur de position est conçu pour envoyer un signal à un dispositif externe lorsque la cible 117 se trouve sensiblement en vis-à-vis du détecteur 115, comme représenté aux figures 13 et 14 illustrant la nacelle en mode de fonctionnement jet inversé.

Les capteurs utilisés lorsque la nacelle est équipée d'un dispositif d'inversion de poussée à grilles fixes sont également des capteurs de proximité ou des capteurs optiques conformes à ceux discutés en référence aux figures 6 à 9.

Selon une variante commune à l'ensemble des modes de réalisation décrits en référence aux figures 6 à 14, une ou plusieurs butées de fin de course peuvent équiper un ou plusieurs rails de guidage de l'ensemble des systèmes de guidage en translation de la structure mobile, ceci afin de limiter la course de la structure mobile, limitant ainsi les contraintes associées.

Comme il va de soi, la présente invention ne se limite pas aux seules formes de réalisation de cette nacelle, décrites ci-dessus uniquement à titre d'exemples illustratifs, mais elle embrasse au contraire toutes les variantes selon le texte des revendications.

## Revendications

1. Nacelle (41, 101) pour turboréacteur d'aéronef, comprenant un dispositif d'inversion de poussée, ladite nacelle comprenant :
- une structure fixe (43, 103), et
- une structure mobile (45, 105) déplaçable en translation le long d'un axe (53) sensiblement parallèle à un axe longitudinal de la nacelle, entre une position escamotée dans laquelle elle assure une continuité aérodynamique avec ladite structure fixe (43, 103) de la nacelle lors d'un fonctionnement de la nacelle en jet direct et une position déployée dans laquelle elle ouvre un passage destiné à la circulation d'un flux d'air secondaire dévié lors d'un fonctionnement de la nacelle en jet inversé, ladite nacelle (41, 101) étant **caractérisée en ce qu'**elle comprend au moins un capteur de position (67, 75, 81, 89, 113), configuré pour détecter une déformation de la structure mobile (45, 105) dépassant un seuil de déformation prédéterminé autorisé,
le capteur de position (67, 75, 81, 113) comprenant :
- un détecteur (69, 77, 83, 115) solidaire de la structure fixe (43, 103) de la nacelle, et
- une cible (71, 79, 85, 117), solidaire de la structure mobile (45, 105) de la nacelle,
le capteur de position (67, 75, 81, 113) étant en outre configuré pour envoyer un signal à un dispositif externe lorsque la cible (71, 79, 85, 117) se trouve sensiblement en vis-à-vis du détecteur (69, 77, 83, 115).

2. Nacelle (41, 101) selon la revendication 1, **caractérisée en ce que** le capteur de position est un capteur de proximité (67) dont le détecteur (69) est solidaire de la structure fixe (43, 103) de la nacelle et dont la cible (71) est solidaire de la structure mobile (45, 105) de la nacelle et est adaptée pour changer l'état d'un champ magnétique émis par le détecteur lorsque ladite cible se trouve sensiblement en vis-à-vis dudit détecteur.

3. Nacelle (41, 101) selon la revendication 1, **caractérisée en ce que** le capteur de position est un capteur optique (75) dont le détecteur (77) est solidaire de la structure fixe (43, 103) de la nacelle et émet un flux lumineux et dont la cible (79) est solidaire de la structure mobile (45, 105) de la nacelle et comporte un moyen de réflexion dudit flux lumineux.

4. Nacelle (41, 101) selon la revendication 1, **caractérisée en ce que** le capteur de position est un capteur électromécanique (81) dont le détecteur (83) est solidaire de la structure fixe (43, 103) de la nacelle et comprend un levier de contact (87) et dont la cible (85) est solidaire de la structure mobile (45, 105) de la nacelle et est conçue pour actionner ledit levier de contact (87) lorsque ladite cible se trouve sensiblement en vis-à-vis dudit détecteur.

5. Nacelle (41) selon l'une quelconque des revendications 1 à 4, dans laquelle :
- la structure fixe (43) comprend :
• un système de guidage supérieur (55) de ladite structure mobile, positionné à proximité d'un pylône destiné à relier ladite nacelle à une aile d'aéronef, et
• un système de guidage inférieur (57) de ladite structure mobile, sensiblement diamétralement opposé audit système de guidage supérieur, et
- la structure mobile (45) comprend :
• un ensemble de grilles de déviation (49), contenues dans une enveloppe (47) définie par un capot de soufflante (25) et par un carter de soufflante (23) d'un turboréacteur lors d'un fonctionnement de la nacelle en jet direct,
• un capot d'inverseur (51), solidaire dudit ensemble de grilles de déviation (49),
• un coulisseau (61), conçu pour permettre le déplacement de ladite structure mobile (45) le long du système de guidage inférieur (57),
ladite nacelle étant **caractérisée en ce que** le détecteur (69, 77, 83) du capteur de position (67, 75, 81) est monté sur au moins un desdits système de guidage, et **en ce que** la cible est montée sur ledit coulisseau (61).

6. Nacelle (41) selon la revendication 5, dans laquelle la structure fixe (43) comprend en outre un bord de déviation (73), assurant une ligne aérodynamique avec une partie aval d'un carter de soufflante d'un turboréacteur, **caractérisée en ce que** le détecteur (69, 77, 83) du capteur de position (67, 75, 81) est monté à proximité dudit bord de déviation (73).

7. Nacelle (101) selon l'une quelconque des revendications 1 à 4, dans laquelle :
- la structure fixe (103) comprend :
• un système de guidage supérieur (55) de ladite structure mobile, positionné à proximité d'un pylône destiné à relier ladite nacelle à une aile d'aéronef, et
• un système de guidage inférieur (57) de ladite structure mobile, sensiblement diamétralement opposé audit système de guidage supérieur, et
- la structure mobile (105) comprend un capot d'inverseur (107), déplaçable en translation le long d'un axe (53) sensiblement parallèle à un axe longitudinal de la nacelle, entre une position escamotée dans laquelle il assure une continuité aérodynamique avec ladite structure fixe (103) de la nacelle lors d'un fonctionnement de la nacelle en jet direct et une position déployée dans laquelle il ouvre un passage destiné à la circulation d'un flux d'air secondaire dévié lors d'un fonctionnement de la nacelle en jet inversé,
ladite nacelle étant **caractérisée en ce que** le détecteur (115) du capteur de position (113) est monté sur au moins un desdits système de guidage, et **en ce que** la cible (117) est montée sur ledit capot d'inverseur, à proximité d'un bord amont dudit capot d'inverseur.

8. Nacelle (41, 101) selon l'une quelconque des revendications 5 à 7, dans laquelle le système de guidage supérieur (55) comprend deux rails de guidage profilés le long du pylône et dans laquelle le système de guidage inférieur (57) comporte un rail de guidage (59) unique, ladite nacelle étant **caractérisée en ce qu'**elle comporte un détecteur sur chaque rail du système de guidage supérieur et un détecteur sur le rail du système de guidage inférieur.

9. Nacelle (41, 101) selon l'une quelconque des revendications 5 à 8, **caractérisée en ce qu'**elle comporte au moins une butée de fin de course montée sur au moins un système de guidage (55, 57) de la structure mobile.

## Patentansprüche

1. Triebwerksgondel (41, 101) für Turbofanflugzeugtriebwerk, umfassend eine Schubumkehrvorrichtung, wobei die Triebwerksgondel umfasst:
- eine feste Struktur (43, 103), und
- eine bewegliche Struktur (45, 105), die entlang einer Achse (53), die etwa parallel zu einer Längsachse der Triebwerksgondel ist, zwischen einer eingefahrenen Position, in der sie eine aerodynamische Kontinuität mit der festen Struktur (43, 103) der Triebwerksgondel bei einem Direktstrahlbetrieb der Triebwerksgondel sichert, und einer ausgefahrenen Position, in der sie einen Durchgang öffnet, der für die Zirkulation eines umgelenkten sekundären Luftstroms bei einem Umkehrstrahlbetrieb der Triebwerksgondel bestimmt ist, translatorisch verlagerbar ist,
wobei die Triebwerksgondel (41, 101) **dadurch gekennzeichnet ist, dass** sie mindestens einen Positionssensor (67, 75, 81, 89, 113) umfasst, der dazu ausgelegt ist, eine Verformung der beweglichen Struktur (45, 105) zu ermitteln, die einen genehmigten vorher festgelegten Verformungsschwellenwert überschreitet,
wobei der Positionssensor (67, 75, 81, 113) umfasst:
- einen Detektor (69, 77, 83, 115), der mit der festen Struktur (43, 103) der Triebwerksgondel fest verbunden ist, und
- ein Ziel (71, 79, 85, 117), das mit der beweglichen Struktur (45, 105) der Triebwerksgondel fest verbunden ist,
wobei der Positionssensor (67, 75, 81, 113) ferner dazu ausgelegt ist, ein Signal an eine externe Vorrichtung zu senden, wenn sich das Ziel (71, 79, 85, 117) etwa gegenüber dem Detektor (69, 77, 83, 115) befindet.

2. Triebwerksgondel (41, 101) nach Anspruch 1, **dadurch gekennzeichnet, dass** der Positionssensor ein Näherungssensor (67) ist, dessen Detektor (69) mit der festen Struktur (43, 103) der Triebwerksgondel fest verbunden ist und dessen Ziel (71) mit der beweglichen Struktur (45, 105) der Triebwerksgondel fest verbunden ist und geeignet ist, den Zustand eines von dem Detektor gesendeten Magnetfelds zu ändern, wenn sich das Ziel etwa gegenüber dem Detektor befindet.

3. Triebwerksgondel (41, 101) nach Anspruch 1, **dadurch gekennzeichnet, dass** der Positionssensor ein optischer Sensor (75) ist, dessen Detektor (77) mit der festen Struktur (43, 103) der Triebwerksgondel fest verbunden ist und einen Lichtstrom sendet und dessen Ziel (79) mit der beweglichen Struktur (45, 105) der Triebwerksgondel fest verbunden ist und ein Reflexionsmittel des Lichtstroms aufweist.

4. Triebwerksgondel (41, 101) nach Anspruch 1, **dadurch gekennzeichnet, dass** der Positionssensor ein elektromechanischer Sensor (81) ist, dessen Detektor (83) mit der festen Struktur (43, 103) der Triebwerksgondel fest verbunden ist und einen Kontakthebel (87) umfasst und dessen Ziel (85) mit der beweglichen Struktur (45, 105) der Triebwerksgondel fest verbunden ist und eingerichtet ist, um den Kontakthebel (87) zu betätigen, wenn sich das Ziel etwa gegenüber dem Detektor befindet.

5. Triebwerksgondel (41) nach einem der Ansprüche 1 bis 4, wobei:
- die feste Struktur (43) umfasst:
• ein oberes Führungssystem (55) der beweglichen Struktur, das in der Nähe eines Pylons positioniert ist, der zur Verbindung der Triebwerksgondel mit einem Flugzeugflügel bestimmt ist, und
• ein unteres Führungssystem (57) der beweglichen Struktur, das dem oberen Führungssystem etwa diametral gegenüberliegt, und
- die bewegliche Struktur (45) umfasst:
• eine Anordnung von Umlenkgittern (49), die in einer Hülle (47) enthalten sind, die von einer Gebläseabdeckung (25) und von einem Gebläsegehäuse (23) eines Turbofantriebwerks bei einem Direktstrahlbetrieb der Triebwerksgondel definiert ist,
• eine Umlenkabdeckung (51), die mit der Anordnung von Umlenkgittern (49) fest verbunden ist,
• einen Schieber (61), der eingerichtet ist, um die Verlagerung der beweglichen Struktur (45) entlang des unteren Führungssystems (57) zu erlauben,
wobei die Triebwerksgondel **dadurch gekennzeichnet ist, dass** der Detektor (69, 77, 83) des Positionssensors (67, 75, 81) auf mindestens einem der Führungssysteme angebracht ist und dass das Ziel auf dem Schieber (61) angebracht ist.

6. Triebwerksgondel (41) nach Anspruch 5, wobei die feste Struktur (43) ferner eine Umlenkkante (73) umfasst, die eine aerodynamische Linie mit einem unterstromigen Teil eines Gebläsegehäuses eines Turbofantriebwerks sichert, **dadurch gekennzeichnet, dass** der Detektor (69, 77, 83) des Positionssensors (67, 75, 81) in der Nähe der Umlenkkante (73) angebracht ist.

7. Triebwerksgondel (101) nach einem der nach einem der Ansprüche 1 bis 4, wobei:
- die feste Struktur (103) umfasst:
• ein oberes Führungssystem (55) der beweglichen Struktur, das in der Nähe eines Pylons positioniert ist, der zur Verbindung der Triebwerksgondel mit einem Flugzeugflügel bestimmt ist, und
• ein unteres Führungssystem (57) der beweglichen Struktur, das dem oberen Führungssystem etwa diametral gegenüberliegt, und
- die bewegliche Struktur (105) eine Umlenkabdeckung (107) umfasst, die entlang einer Achse (53), die etwa parallel zu einer Längsachse der Triebwerksgondel ist, zwischen einer eingefahrenen Position, in der sie eine aerodynamische Kontinuität mit der festen Struktur (103) der Triebwerksgondel bei einem Direktstrahlbetrieb der Triebwerksgondel sichert, und einer ausgefahrenen Position, in der sie einen Durchgang öffnet, der für die Zirkulation eines umgelenkten sekundären Luftstroms bei einem Umkehrstrahlbetrieb der Triebwerksgondel bestimmt ist, translatorisch verlagerbar ist,
wobei die Triebwerksgondel **dadurch gekennzeichnet ist, dass** der Detektor (115) des Positionssensors (113) auf mindestens einem der Führungssysteme angebracht ist und dass das Ziel (117) auf der Umlenkabdeckung in der Nähe einer oberstromigen Kante der Umlenkabdeckung angebracht ist.

8. Triebwerksgondel (41, 101) nach einem der Ansprüche 5 bis 7, wobei das obere Führungssystem (55) zwei Führungsschienen mit Profil entlang des Pylons umfasst und wobei das untere Führungssystem (57) eine einzige Führungsschiene (59) aufweist, wobei die Triebwerksgondel **dadurch gekennzeichnet ist, dass** sie einen Detektor auf jeder Schiene des oberen Führungssystems und einen Detektor auf der Schiene des unteren Führungssystems aufweist.

9. Triebwerksgondel (41, 101) nach einem der Ansprüche 5 bis 8, **dadurch gekennzeichnet, dass** sie mindestens einen Endlagenanschlag aufweist, der auf mindestens einem Führungssystem (55, 57) der beweglichen Struktur angebracht ist.

## Claims

1. A nacelle (41, 101) for an aircraft turbojet engine, comprising a thrust reverser device, said nacelle comprising:
- a fixed structure (43, 103), and
- a movable structure (45, 105) displaceable in translation along an axis (53) substantially parallel to a longitudinal axis of the nacelle, between a retracted position in which it ensures an aerodynamic continuity with said fixed structure (43, 103) of the nacelle during a direct jet operation of the nacelle and a deployed position in which it opens a passage intended for the circulation of a secondary air flow diverted during a reverse jet operation of the nacelle,
said nacelle (41, 101) being **characterized in that** it comprises at least one position sensor (67, 75, 81, 89, 113), configured to detect a deformation of the movable structure (45, 105) exceeding a predetermined authorized deformation threshold.
the position sensor (67, 75, 81, 113) comprising:
- a detector (69, 77, 83, 115) secured to the fixed structure (43, 103) of the nacelle, and
- a target (71, 79, 85, 117) secured to the movable structure (45, 105) of the nacelle,
the position sensor (67, 75, 81, 113) being further configured to send a signal to an external device when the target (71, 79, 85, 117) substantially faces the detector (69, 77, 83, 115).

2. The nacelle (41, 101) according to claim 1, **characterized in that** the position sensor is a proximity sensor (67) whose detector (69) is secured to the fixed structure (43, 103) of the nacelle and whose target (71) is secured to the movable structure (45, 105) of the nacelle and is adapted to change the state of a magnetic field emitted by the detector when said target substantially faces said detector.

3. The nacelle (41, 101) according to claim 1, **characterized in that** the position sensor is an optical sensor (75) whose detector (77) is secured to the fixed structure (43, 103) of the nacelle and emits a luminous flux and whose target (79) is secured to the movable structure (45, 105) of the nacelle and includes means for reflecting said luminous flux.

4. The nacelle (41, 101) according to claim 1, **characterized in that** the position sensor is an electromechanical sensor (81) whose detector (83) is secured to the fixed structure (43, 103) of the nacelle and comprises a contact lever (87) and whose target (85) is secured to the movable structure (45, 105) of the nacelle and is designed to actuate said contact lever (87) when said target substantially faces said detector.

5. The nacelle (41) according to any one of claims 1 to 4, wherein:
- the fixed structure (43) comprises:
• an upper guiding system (55) of said movable structure, positioned proximate to a mast intended to connect said nacelle to an aircraft wing, and
• a lower guiding system (57) of said movable structure, substantially diametrically opposite to said upper guiding system, and
- the movable structure (45) comprises:
• a set of cascade vanes (49), contained within an envelope (47) defined by a fan cowl (25) and by a fan casing (23) of a turbojet engine during a direct jet operation of the nacelle,
• a thrust reverser cowl (51), secured to said set of cascade vanes (49),
• a slide (61), designed to enable the displacement of said movable structure (45) along the lower guiding system (57),
said nacelle being **characterized in that** the detector (69, 77, 83) of the position sensor (67, 75, 81) is mounted on at least one of said guiding systems, and **in that** the target is mounted on said slide (61).

6. The nacelle (41) according to claim 5, wherein the fixed structure (43) further comprises a deflection edge (73), ensuring an aerodynamic line with a downstream portion of a fan casing of a turbojet engine, **characterized in that** the detector (69, 77, 83) of the position sensor (67, 75, 81) is mounted proximate to said deflection edge (73).

7. The nacelle (101) according to any one of claims 1 to 4, wherein:
- the fixed structure (103) comprises:
• an upper guiding system (55) of said movable structure, positioned proximate to a mast intended to connect said nacelle to an aircraft wing, and
• a lower guiding system (57) of said movable structure, substantially diametrically opposite to said upper guiding system, and
- the movable structure (105) comprises a thrust reverser cowl (107), displaceable in translation along an axis (53) substantially parallel to a longitudinal axis of the nacelle, between a retracted position in which it ensures an aerodynamic continuity with said fixed structure (103) of the nacelle during a direct jet operation of the nacelle and a deployed position in which it opens a passage intended for the circulation of a secondary air flow diverted during a reverse jet operation of the nacelle,
said nacelle being **characterized in that** the detector (115) of the position sensor (113) is mounted on at least one of said guiding systems, and **in that** the target (117) is mounted on said thrust reverser cowl, proximate to an upstream edge of said thrust reverser cowl.

8. The nacelle (41, 101) according to any one of claims 5 to 7, wherein the upper guiding system (55) comprises two profiled guiding rails along the mast and wherein the lower guiding system (57) includes one single guiding rail (59), said nacelle being **characterized in that** it includes a detector on each rail of the upper guiding system and a detector on the rail of the lower guiding system.

9. The nacelle (41, 101) according to any one of claims 5 to 8, **characterized in that** it includes at least one end-of-travel stop mounted on at least one guiding system (55, 57) of the movable structure.
